# EUROPEAN PATENT SPECIFICATION

(11) **EP 4 185 954 B1**
(45) Date of publication and mention of the grant of the patent: **04.03.2026**
(21) Application number: 20780381.8
(22) Date of filing: 03.08.2020
(51) Int. Cl.: G06F 8/41, G06F 9/448

(54) **APPLICATION SERVICE METADATA ENCODING AND INITIALIZATION**
ANWENDUNGSDIENSTMETADATENCODIERUNG UND -INITIALISIERUNG
ENCODAGE ET INITIALISATION DE MÉTADONNÉES DE SERVICE D'APPLICATION

(43) Date of publication of application: 31.05.2023
(73) Proprietor: Huawei Technologies Co., Ltd., Shenzhen, Guangdong 518129 (CN)
(72) Inventor: PAVLOV, Pavel Evgenievich, Shenzhen Guangdong, 518129 (CN); TREPAKOV, Ivan Sergeevich, Shenzhen Guangdong, 518129 (CN)
(74) Representative: Epping - Hermann - Fischer
(86) International application number: PCT/RU2020/000406
(87) International publication number: WO 2022/031181

(56) References cited:
- KR-A- 20030 052 767
- ANONYMOUS: "Texas Instruments TMS320C30 C Compiler Reference Guide", 31 July 1989 (1989-07-31), pages 1 - 214, XP055794412, Retrieved from the Internet <URL:ftp://bitsavers.informatik.uni-stuttgart.de/components/ti/TMS320xx/1989_TI_TMS320C30_C_Compiler_Reference_Guide.pdf> [retrieved on 20210412]
- KIM MYUNGSIK ET AL: "Selective Segment Initialization: Exploiting NVRAM to Reduce Device Startup Latency", IEEE EMBEDDED SYSTEMS LETTERS, IEEE, USA, vol. 6, no. 2, 1 June 2014 (2014-06-01), pages 33 - 36, XP011549169, ISSN: 1943-0663, [retrieved on 20140523], DOI: 10.1109/LES.2014.2312017
- PAWLOWSKI ANDRE ANDRE PAWLOWSKI@RUB DE ET AL: "VPS excavating high-level C++ constructs from low-level binaries to protect dynamic dispatching", PROCEEDINGS OF THE 35TH ANNUAL COMPUTER SECURITY APPLICATIONS CONFERENCE, ACMPUB27, NEW YORK, NY, USA, 9 December 2019 (2019-12-09), pages 97 - 112, XP058468890, ISBN: 978-1-4503-7628-0, DOI: 10.1145/3359789.3359797
- ANONYMOUS ED - DARL KUHN: "Method for reducing memory usage by vtable sharing", IP.COM, IP.COM INC., WEST HENRIETTA, NY, US, 2 May 2002 (2002-05-02), XP013002933, ISSN: 1533-0001

## Description

### TECHNICAL FIELD

The present disclosure relates generally to the field of data processing, and particularly to apparatuses for encoding and initializing service metadata required to efficiently run applications written in object-oriented programming languages, and a method for encoding service metadata of an application, and a computer program product.

### BACKGROUND

To be properly run on a user equipment (UE), such, for example, as a desktop computer or a mobile phone, an application requires service metadata comprising different run-time data. The service metadata are usually generated by a compiler that is used in concert with a linker to generate an executable file of the application from a source code of the application. There are at least two approaches for generating the service metadata, each of which has its own advantages and disadvantages.

The first approach is embodied in ahead-of-time (AOT) compilers that generate the service metadata required by the application in advance and store the service metadata in the executable file of the application. Subsequently, i.e. at run-time, the service metadata are loaded from the executable file. Such AOT compilation results in an unnecessary and undesired increase of an executable file size (i.e. a disk footprint), as well as slows down application startup due to a relatively large volume of the service metadata to be loaded.

The second (opposite) approach is embodied in just-in-time (JIT) compilers that generate the service metadata required by the application on-demand at the run-time. It should be noted that the second approach may be used in concert with the first approach (i.e. some of the service metadata may be generated in advance, while the rest of the service metadata may be generated on-demand). Although the second approach eliminates disk footprint overheads peculiar to the first approach, it however degrades both startup time and execution time of the application. Furthermore, being used in concert with the first approach, the second approach also negatively affects optimization capabilities of the AOT compilers. Texas Instruments, TMS320C30 C Compiler, Reference Guide describes the TMS320C30 C Compiler. Its main purpose is to present the details and characteristics of this particular C compiler, including its memory model and object representation. This document only describes that the compiler produces relocatable code and the linker allocate code and data into appropriate memory spaces. This document suggests using "C compiler", "Assembler" and "Linker" together for generating and allocating initialized data segments and uninitialized data segments, wherein the linker can be configured to allocate global variables into fast internal RAM or to allocate executable code into internal ROM (see 4.1 Memory Model). This document further suggests that at program startup time, a C boot routine copies data out of an initialized .cinit section (which may be in ROM) and stores it in an uninitialized .bss section.

### SUMMARY

This summary is provided to introduce a selection of concepts in a simplified form that are further described below in the detailed description.

It is an objective of the present disclosure to provide a technical solution that allows obtaining an encoded representation of service metadata of an application at compile-time and subsequent initialization of the service metadata based on the encoded representation at startup time.

The objective above is achieved by the features of the independent claims in the appended claims. Further embodiments and examples are apparent from the dependent claims, the detailed description and the accompanying drawings.

Thus, the invention is set out by the set of appended claims. In the following, parts of the description and drawing referring to examples, which are not covered by the claims are not presented as embodiments of the invention, but as illustrative examples useful for understanding the invention. The embodiments of the invention are defined in particular by the appended claims.

According to a first aspect, an apparatus for encoding service metadata of an application is provided. The apparatus according to the first aspect comprises at least one processor and a memory coupled to the at least one processor. The memory is configured to store processor-executable instructions which cause the at least one processor operate as follows. At first, the at least one processor receives a source code of the application and use the source code to determine the service metadata of the application. Then, the at least one processor obtains an encoded representation of the service metadata. Next, the at least one processor compiles the source code to generate an executable file of the application. The executable file comprises an initialized read-only data segment and an uninitialized data segment. The at least one processor reserves, at least in part, the uninitialized data segment of the executable file for the service metadata. After that, the at least one processor stores the encoded representation of the service metadata in the initialized read-only data segment of the executable file and stores the executable file itself in the memory. By storing the encoded representation of the service metadata in the memory (instead of the actual service metadata), the apparatus according to the first aspect is able to reduce the disk footprint of the executable file and, at the same time, the amount of the service metadata loaded at the run-time of the application, compared to conventional AOT compilers.

In one embodiment of the first aspect, the uninitialized data segment of the executable file comprises a Block Started by Symbol (BSS) segment. This may provide the compatibility of the apparatus according to the first aspect with a common standard file format for executable files.

In one embodiment of the first aspect, the at least one processor is configured to determine the service metadata of the application by parsing the source code of the application. This may make the apparatus according to the first aspect more flexible in use.

In one embodiment of the first aspect, the memory is further configured to store a database comprising multiple source codes and service metadata corresponding to different applications. In this embodiment, the at least one processor is configured to determine the service metadata of the application by accessing the database, finding the source code of the application in the database, and reading the service metadata of the application from the database. By using such a database, it is possible to speed up obtaining the service metadata without having to analyze anyhow (e.g., parse) the source code of the application, thereby reducing computational costs as well.

In one embodiment of the first aspect, the at least one processor is configured to obtain the encoded representation of the service metadata according to at least one of the following: a type of the service metadata, a required size of the encoded representation of the service metadata, and a required decoding time of the encoded representation of the service metadata. By so doing, it is possible to obtain the compact and quick-to-decode encoded representation of the service metadata, thereby reducing both the disk footprint of the executable file and the startup time of the application more efficiently. In turn, the reduction of the startup time of the application may improve application run-time performance.

In one embodiment of the first aspect, the at least one processor is further configured to select the required size of the encoded representation of the service metadata based on a pre-allocated size of the memory that is to be used for storing the executable file. By so doing, it is possible to provide a more reasonable memory usage in the apparatus according to the first aspect.

In one embodiment of the first aspect, the at least one processor is further configured to select the required decoding time based on a predefined startup time of the application. By so doing, it is possible to decode the service metadata more efficiently.

According to the first aspect, the at least one processor is configured to obtain the encoded representation of the service metadata by using a general-purpose data compression algorithm. The general-purpose data compression algorithm, such, for example, as variable-length encoding, Little Endian Base 128 (LEB128) encoding, Huffman encoding, Lempel-Ziv-Markov chain algorithm (LZMA) encoding, run-length encoding, etc., may allow the service metadata to be compressed as the encoded representation more efficiently.

In one embodiment of the first aspect, the at least one processor is configured to compile the source code by using an AOT compiler. This may make the apparatus according to the first aspect more flexible in use.

According to a second aspect, an apparatus for initializing service metadata of an application is provided. The apparatus according to the second aspect comprises at least one processor and a memory coupled to the at least one processor. The memory is configured to store processor-executable instructions which cause the at least one processor to operate as follows. At first, the at least one processor accesses an executable file of the application. The executable file comprises an initialized read-only data segment and an uninitialized data segment. The initialized read-only data segment of the executable file comprises an encoded representation of the service metadata for the application. The uninitialized data segment of the executable file is reserved, at least in part, for the service metadata. Then, the at least one processor obtains a decoded representation of the service metadata by decoding the encoded representation of the service metadata. After that, the at least one processor initializes the service metadata from the decoded representation of the service metadata in the reserved uninitialized data segment of the executable file. By using the executable file thus configured, the apparatus according to the second aspect may properly and quickly initialize the actual service metadata required for running and operating the application, thereby significantly reducing the application startup.

In one embodiment of the second aspect, the uninitialized data segment of the executable file comprises a Block Started by Symbol segment. This may provide the compatibility of the apparatus according to the second aspect with the common standard file format for executable files.

According to the second aspect, the at least one processor is configured to decode the encoded representation of the service metadata by using a general-purpose data decompression algorithm. The general-purpose data decompression algorithm, such, for example, as variable-length decoding, LEB128 decoding, Huffman decoding, LZMA decoding, run-length decoding, etc., may increase the efficiency of obtaining the decoded representation of the service metadata.

According to a third aspect, an apparatus for running an application is provided. The apparatus according to the third aspect comprises the apparatus according to the first aspect and the apparatus according to the second aspect. With this configuration, the apparatus according to the third aspect may perform both the functions of encoding and initializing the service metadata, while providing the same advantages as those discussed above with reference to the apparatuses according to the first and second aspects.

According to a fourth aspect, a method for encoding service metadata of an application is provided. The method according to the fourth aspect starts with the steps of receiving a source code of the application and using the source code to determine the service metadata of the application. Then, the method according to the fourth aspect proceeds to the step of obtaining an encoded representation of the service metadata. After that, the method according to the fourth aspect goes to the step of compiling the source code to generate an executable file of the application. The executable file comprises an initialized read-only data segment and an uninitialized data segment. Further, the method according to the fourth aspect proceeds to the steps of reserving, at least in part, the uninitialized data segment of the executable file for the service metadata and storing the encoded representation of the service metadata in the initialized read-only data segment of the executable file. The method according to the fourth aspect ends up with the step of storing the executable file itself. By storing the encoded representation of the service metadata in the memory (instead of the actual service metadata), it is possible to reduce the disk footprint of the executable file and, at the same time, the amount of the service metadata loaded at the run-time of the application, compared to the conventional AOT compilation.

According to a fifth aspect, a method for initializing service metadata of an application is provided. The method according to the fifth aspect starts with the step of accessing an executable file of the application. The executable file comprises an initialized read-only data segment and an uninitialized data segment. The initialized read-only data segment of the executable file comprises an encoded representation of the service metadata for the application, and the uninitialized data segment of the executable file is reserved, at least in part, for the service metadata. Then, the method according to the fifth aspect proceeds to the step of obtaining a decoded representation of the service metadata by decoding the encoded representation of the service metadata. The method according to the fifth aspect ends up with the step of initializing the service metadata from the decoded representation of the service metadata in the reserved uninitialized data segment of the executable file. By using the executable file thus configured, it is possible to properly and quickly initialize the actual service metadata required for running and operating the application, thereby significantly reducing the application startup.

According to a sixth aspect, a computer program product is provided. The computer program product according to the sixth aspect stores a computer-readable storage medium comprising a computer code. When executed by at least one processor, the computer code causes the at least one processor to perform the method according to the fourth aspect. By using such a computer program product, it is possible to simplify the implementation of the method according to the fourth aspect in any computing device, such, for example, as the apparatus according to the first aspect.

According to a seventh aspect, a computer program product is provided. The computer program product according to the seventh aspect stores a computer-readable storage medium comprising a computer code. When executed by at least one processor, the computer code causes the at least one processor to perform the method according to the fifth aspect. By using such a computer program product, it is possible to simplify the implementation of the method according to the fifth aspect in any computing device, such, for example, as the apparatus according to the second aspect.

Other features and advantages of the present disclosure will be apparent upon reading the following detailed description and reviewing the accompanying drawings.

### BRIEF DESCRIPTION OF THE DRAWINGS

The present disclosure is explained below with reference to the accompanying drawings in which:
FIG. 1 shows a block diagram of an apparatus for encoding service metadata of an application in accordance with one exemplary example;
FIG. 2 shows a flowchart of a method for encoding service metadata of an application in accordance with one exemplary example;
FIG. 3 shows a block diagram of an apparatus for initializing the service metadata of the application in accordance with one exemplary example;
FIG. 4 shows a flowchart of a method for initializing the service metadata of the application in accordance with one exemplary example;
FIG. 5 shows a block diagram of an apparatus for running an application in accordance with one exemplary example;
FIG. 6 represents a bar chart showing a total size reduction for an encoded representation of a VMT layout in kb for different Java runtime environments; and
FIG. 7 represents a bar chart showing a total size reduction for the whole executable file in kb for the same Java runtime environments.

### DETAILED DESCRIPTION

Various examples of the present disclosure are further described in more detail with reference to the accompanying drawings. However, the present disclosure may be embodied in many other forms and should not be construed as limited to any certain structure or function discussed in the following description. In contrast, these examples are provided to make the description of the present disclosure detailed and complete.

According to the detailed description, it will be apparent to the ones skilled in the art that the scope of the present disclosure encompasses any example thereof, which is disclosed herein, irrespective of whether this example is implemented independently or in concert with any other example of the present disclosure. For example, the apparatuses and methods disclosed herein may be implemented in practice by using any numbers of the examples provided herein. Furthermore, it should be understood that any example of the present disclosure may be implemented using one or more of the elements presented in the appended claims.

The word "exemplary" is used herein in the meaning of "used as an illustration". Unless otherwise stated, any example described herein as "exemplary" should not be construed as preferable or having an advantage over other examples.

According to the examples disclosed herein, a user equipment or UE for short may refer to a mobile device, a mobile station, a mobile terminal, a subscriber unit, a mobile phone, a cellular phone, a smart phone, a cordless phone, a personal digital assistant (PDA), a wireless communication device, a desktop computer, a laptop computer, a tablet computer, a gaming device (e.g., a gaming console, a gaming controller, etc.), a netbook, a smartbook, an ultrabook, a medical device or medical equipment, a biometric sensor, a wearable device (e.g., a smart watch, smart glasses, a smart wrist band, etc.), an entertainment device (e.g., an audio player, a video player, etc.), a vehicular component or sensor, a smart meter/sensor, an unmanned vehicle (e.g., an industrial robot, a quadcopter, etc.), industrial manufacturing equipment, a global positioning system (GPS) device, an Internet-of-Things (IoT) device, a machine-type communication (MTC) device, a group of Massive loT (MloT) or Massive MTC (mMTC) devices/sensors, or any other suitable device configured to support wireless or wire communications. In some example examples, the UE may refer to at least two collocated and inter-connected UEs thus defined.

As used in the examples disclosed herein, an application program or application for short may refer to a software program that runs on a UE. Some examples of the application include web-browsers, e-mail programs, word processors, spreadsheets, games, utilities, etc. In general, the term "application" may encompass any program that executes a specific function on the UE. It is also intended herein that the application is stored in and implemented by one or more executable files. Such an executable file may comprise an initialized data segment and an uninitialized data segment. The uninitialized data segment comprises all global variables and static variables that are initialized to zero or do not have explicit initialization in a source code of the application. In turn, the initialized data segment comprises uninitialized static and global variables in the source code of the application. The initialized data segment is further divided into a data segment and a read-only data (rodata) segment. The rodata segment usually stores all global and static variables that are read only, while the data segment is read-write meaning that variables stored therein may be altered at the run-time of the application.

The service metadata refers to run-time data and structures and comprises at least one of a Virtual Method Table (VMT), an Interface Method Table (IMT), and class instance layout information for a Garbage Collector (GC), which are required for efficient execution of an application. The service metadata are typically generated by compilers based on a source code of the application and used later at the run-time of the application. The service metadata often comprise direct references to other data structures (to be efficient at the run-time), which may be updated at load-time (i.e. when the application is first loaded by an operating system of the UE for execution) and thus cannot be easily compressed.

There are at least two existing approaches for service metadata generation: the so-called AOT compilation and JIT compilation. The AOT compilation involves generating all service metadata required for a certain application ahead-of-time and then storing them in the executable file of the application. Thus, the AOT compilation results in increasing the disk footprint of the executable file, as well as slows down the application startup due to a relatively large volume of the service metadata to be loaded. Instead, the JIT compilation involves generating all service metadata just-in-time (i.e. at the application startup). The JIT compilation may be used together with the AOT compilation. Although the JIT compilation eliminates disk footprint overheads peculiar to the AOT compilation, it however degrades both startup time and execution time of the application. Furthermore, being used in concert with the AOT compilation, the JIT compilation also negatively affects optimization capabilities of conventional AOT compilers. In general, each of these approaches performs the service metadata generation as a single continuous process, producing all necessary service metadata either at compile-time (AOT) or at run-time (JIT).

The exemplary examples disclosed herein provide a technical solution that allows mitigating or even eliminating the above-sounded drawbacks peculiar to the prior art. In particular, the technical solution disclosed herein involves obtaining and storing an encoded representation of service metadata in an initialized read-only data segment of an executable file of an application, and reserving, at least in part, an uninitialized data segment of the executable file for the service metadata themselves. The encoded representation is then decoded at the run-time of the application to initialize the service metadata in the reserved uninitialized data segment. By so doing, it is possible to reduce a disk footprint (executable file size) of the application because the encoded representation of the service metadata is only stored in the executable file, instead of the actual service metadata. Moreover, the encoded representation of the service metadata is quick to decode, thereby reducing the startup time of the application.

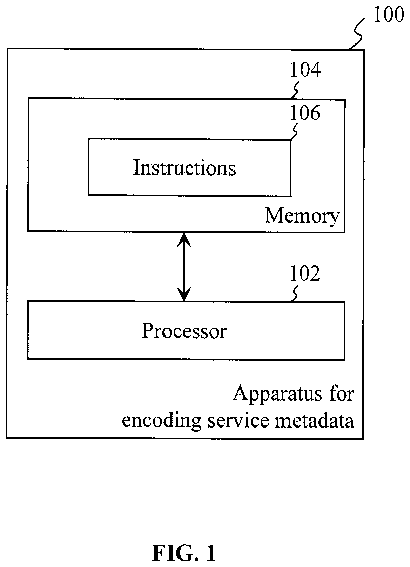

FIG. 1 shows a block diagram of an apparatus 100 for encoding service metadata of an application in accordance with one exemplary example. The apparatus 100 may be part of a UE or implemented as an individual apparatus (e.g., a remote server) which may be accessed by the UE via wireless or wired connection. As shown in FIG. 1, the apparatus 100 comprises a processor 102 and a memory 104. The memory 104 stores processor-executable instructions 106 which, when executed by the processor 102, cause the processor 102 to compress service metadata of the application into their encoded representation, as will be described below in more detail. It should be noted that the number, arrangement and interconnection of the constructive elements constituting the apparatus 100, which are shown in FIG. 1, are not intended to be any limitation of the present disclosure, but merely used to provide a general idea of how the constructive elements may be implemented within the apparatus 100. For example, the processor 102 may be replaced with several processors, as well as the memory 104 may be replaced with several removable and/or fixed storage devices, depending on particular applications. Furthermore, being implemented individually, the apparatus 100 may further comprise a transceiver configured to perform data reception and transmission for different purposes. In some examples, such a transceiver may be implemented as two individual devices, with one for a receiving operation and another for a transmitting operation. Irrespective of its implementation, the transceiver is intended to be capable of performing different operations required to perform the data reception and transmission, such, for example, as signal modulation/demodulation, encoding/decoding, etc.

The processor 102 may be implemented as a CPU, general-purpose processor, single-purpose processor, microcontroller, microprocessor, application specific integrated circuit (ASIC), field programmable gate array (FPGA), digital signal processor (DSP), complex programmable logic device, etc. It should be also noted that the processor 102 may be implemented as any combination of one or more of the aforesaid. As an example, the processor 102 may be a combination of two or more microprocessors.

The memory 104 may be implemented as a classical nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 106 stored in the memory 104 may be configured as a computer-executable code which causes the processor 102 to perform the aspects of the present disclosure. The computer-executable code for carrying out operations or steps for the aspects of the present disclosure may be written in any combination of one or more programming languages, such as Java, C++, or the like. In some examples, the computer-executable code may be in the form of a high-level language or in a pre-compiled form and be generated by an interpreter (also pre-stored in the memory 104) on the fly.

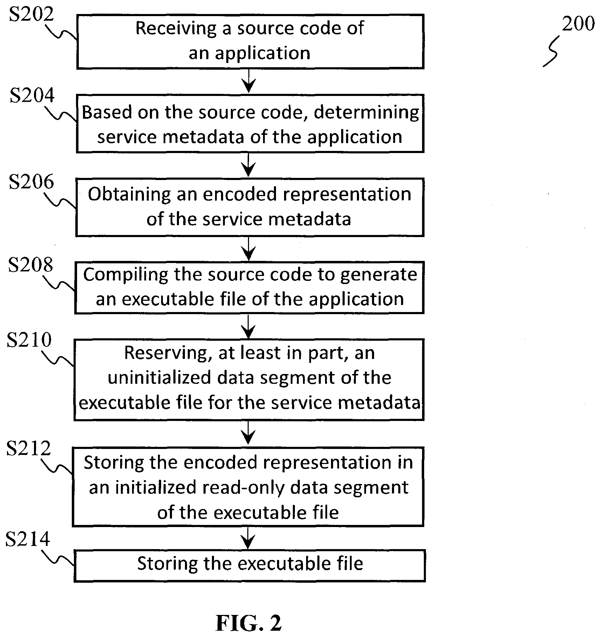

FIG. 2 shows a flowchart of a method 200 for encoding service metadata of an application in accordance with one exemplary example. In general, the method 200 describes the operation of the apparatus 100. The method 200 starts with a step S202, in which the processor 102 receives a source code of the application. The source code may be written in any object-oriented programming language, such, for example, as Java, C++, C#, Python, R, PHP, JavaScript, Ruby, Perl, Object Pascal, etc. The source code may be provided to the processor 102 from outside (e.g., an application provider), or it may be written by a user of the apparatus 100 by using any suitable programming software. Then, the method 200 proceeds to a step S204, in which the processor 102 uses the source code to determine the service metadata of the application. After that, a next step S206 is initiated, in which the processor 102 obtains an encoded representation of the service metadata. Next, the method 200 goes to a step S208, in which the processor 102 compiles the source code to generate an executable file of the application. The step S208 may be performed by using a conventional AOT compiler; however, it should not be construed as any limitation of the present disclosure which allows any other suitable compilers to be used for the same purpose. The executable file comprises an initialized read-only data (rodata) segment and an uninitialized data segment. Further, the method 200 proceeds to a step S210, in which the processor 102 reserves, at least in part, the uninitialized data segment of the executable file for the service metadata, and a step S212, in which the processor 102 stores the encoded representation of the service metadata in the initialized read-only data segment of the executable file. The method 200 ends up with a step S214, in which the processor 102 stores the executable file itself in the memory 104 of the apparatus 100.

In one exemplary example, the uninitialized data segment of the executable file comprises a Block Started by Symbol (BSS) segment. This may provide the compatibility of the apparatus according to the first aspect with a common standard file format for executable files (e.g., the Executable and Linkable Format, or ELF for shot, which is the generic file format for executable files in Linux systems). In another exemplary example, the uninitialized data segment of the executable file may be configured as part of the initialized data segment; however, this possible example is less efficient than the previous one (i.e. with the BSS segment) because it would lead to wasting a space in the executable file and a potential slowdown in the application startup.

In one exemplary example, the processor 102 is configured to determine the service metadata of the application in the step S204 of the method 200 by parsing the source code of the application. Besides parsing, the processor 102 may also determine the service metadata by using any other suitable source code analysis tools.

In one other exemplary example, the memory 104 is further configured to store a database comprising multiple source codes and service metadata corresponding to different applications. In this example, the processor 102 is configured to determine the service metadata of the application in the step S204 of the method 200 by accessing the database, finding the source code of the application in the database, and reading the service metadata of the application from the database. The database itself may be structured in a tabular form. The database may be configured such that each row corresponds to a certain source code, and each column comprises a service metadata component corresponding to the source code. Alternatively, the database may be configured as a set of tables, with each table being associated with a certain source code and comprising service metadata for the source code. The processor 102 may be configured to query and maintain the database by using any suitable programming language, for example, Structured Query Language (SQL). By using such a database, it is possible to speed up obtaining the service metadata without having to analyze anyhow (e.g., parse) the source code of the application, thereby reducing computational costs as well.

In one exemplary example, the processor 102 is configured, in the step S206 of the method 200, to obtain the encoded representation of the service metadata according to at least one of the following: a type of the service metadata, a required size of the encoded representation of the service metadata, and a required decoding time of the encoded representation of the service metadata. The required size of the encoded representation of the service metadata may be selected based on a pre-allocated size of the memory that is to be used for storing the executable file. The required decoding time may be selected based on a predefined startup time of the application. By so doing, it is possible to obtain the compact and quick-to-decode encoded representation of the service metadata, thereby reducing both the disk footprint of the executable file and the startup time of the application more efficiently.

The encoded representation of the service metadata may be obtained by the processor 102 by using a general-purpose data compression algorithm. Examples of the general-purpose data compression algorithm include but are not limited to variable-length encoding, Little Endian Base 128 (LEB128) encoding, Huffman encoding, Lempel-Ziv-Markov chain algorithm (LZMA) encoding, run-length encoding, etc. The general-purpose data compression algorithm allows the service metadata to be compressed as the encoded representation more efficiently.

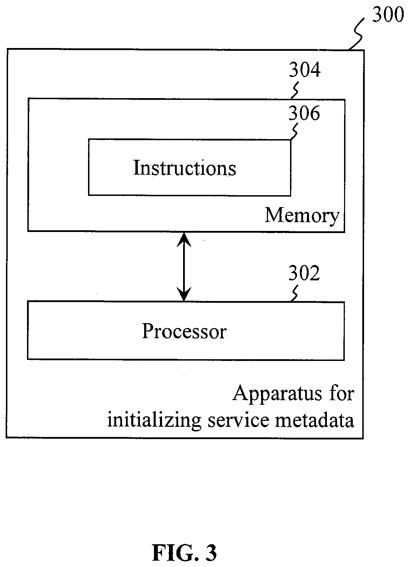

FIG. 3 shows a block diagram of an apparatus 300 for initializing the service metadata of the application in accordance with one exemplary example. The apparatus 300 may be part of the same UE as the apparatus 100, or it may be implemented as an individual apparatus which is configured to communicate with the apparatus 100 via wireless or wired connection. As shown in FIG. 3, the apparatus 300 comprises a processor 302 and a memory 304. The memory 304 stores processor-executable instructions 306 which, when executed by the processor 302, cause the processor 302 to initialize the service metadata of the application, as will be described below in more detail. It should be noted that the number, arrangement and interconnection of the constructive elements constituting the apparatus 300, which are shown in FIG. 3, are not intended to be any limitation of the present disclosure, but merely used to provide a general idea of how the constructive elements may be implemented within the apparatus 300. For example, the processor 302 may be replaced with several processors, as well as the memory 304 may be replaced with several removable and/or fixed storage devices, depending on particular applications. Furthermore, being implemented individually, the apparatus 300 may further comprise a transceiver configured to perform data reception and transmission for different purposes. In some examples, such a transceiver may be implemented as two individual devices, with one for a receiving operation and another for a transmitting operation. Irrespective of its implementation, the transceiver is intended to be capable of performing different operations required to perform the data reception and transmission, such, for example, as signal modulation/demodulation, encoding/decoding, etc.

In general, the processor 302, the memory 304 and the executable instructions 306 may be implemented in the same or similar manner as the processor 102, the memory 104 and the executable instructions 106, respectively, in the apparatus 100.

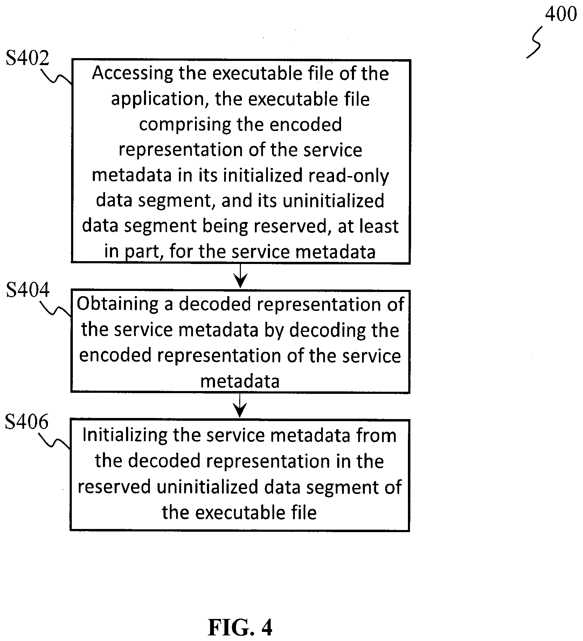

FIG. 4 shows a flowchart of a method 400 for initializing the service metadata of the application in accordance with one exemplary example. In general, the method 400 describes the operation of the apparatus 300. The method 400 starts with a step S402, in which the processor 302 accesses the executable file of the application that has been stored in the step S214 of the method 200 in the memory 104 of the apparatus 100. If the apparatus 100 and the apparatus 300 are implemented in the same UE, said accessing the executable file in the step S402 of the method 400 involves loading or reading the executable file from the memory 104 of the apparatus 100. At the same time, if the apparatus 300 is implemented remotely from the apparatus 100, the processor 302 may access the executable file by communicating (via wired or wireless connection) with the apparatus 100 to download the executable file from the memory 104. As noted above, the executable file comprises the encoded representation of the service metadata in its initialized read-only data segment, and its uninitialized data segment (e.g., the BSS segment) is reserved, at least in part, for the service metadata. Then, the method 400 proceeds to a step S404, in which the processor 302 obtains a decoded representation of the service metadata by decoding the encoded representation of the service metadata. The step S404 may be performed by the processor 302 by using a general-purpose data decompression algorithm. Examples of the general-purpose data decompression algorithm include but are not limited to variable-length decoding, LEB128 decoding, Huffman decoding, LZMA decoding, run-length decoding, etc. The method 400 ends up with a step S406, in which the processor 302 initializes the service metadata from the decoded representation of the service metadata in the reserved uninitialized data segment of the executable file.

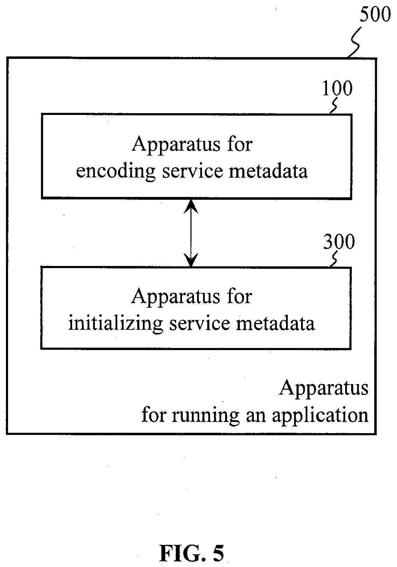

FIG. 5 shows a block diagram of an apparatus 500 for running the application in accordance with one exemplary example. The apparatus 500 may be implemented as any UE discussed above. As shown in FIG. 5, the apparatus 500 comprises the apparatus 100 and the apparatus 300. With this configuration, the apparatus 500 may perform both the functions of encoding and initializing the service metadata, while providing the same advantages as those discussed above with reference to the apparatuses 100 and 300.

Given below is one example of how the above-described apparatuses 100 and 300 may operate in concert or how the apparatus 500 may operate. In particular, it is assumed that the service metadata of the application is represented by the largest service metadata structure in object-oriented programming - a Virtual Method Table (VMT). The VMT as such is an array of method code references associated with each class and directly accessible from every object of a given class. The VMT has a hierarchical structure: a subclass inherits a VMT layout of a superclass, while adding new entries and/or overwriting entries of overridden methods with a new implementation address. At compile-time, the processor 102 assigns, by using a suitable compiler (e.g., the AOT compiler), each method a unique index in declaring class' VMT, called a virtual number or vnum. The compiler then uses this number to efficiently generate a virtual call as an indirect call by a VMT entry with the given virtual number. It should be also noted that the present disclosure is not limited to the VMTs only, and the methods 200 and 300 may be equally used in relation to other service metadata structures, such, for example, as Interface Method Tables (IMT), etc.

Now let us apply the method 200 to generate the VMT for an example class hierarchy in an arbitrary object-oriented language (e.g., Java, C#, etc.), which looks as follows:

```
                                  class B {
                                        void a ( ) { ... }
                                        void b ( ) { ... }
                                        void c ( ) { ... }
                                        void d ( ) { ... }
                                  }
 
                                  class C extends B {
                                        void a ( ) { ... }
                                        void e ( ) { ... }
                                  }
```

The above hierarchy consists of two classes B and C, where class C extends class B, overrides method 'a' defined in B with its own implementation and defines method 'e' in addition to methods 'b', 'c' and 'd' already defined in B. The resulting VMT structure for this hierarchy at the run-time of the application should look as follows:

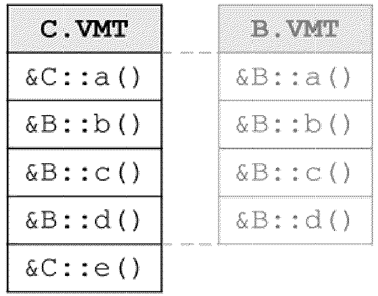

In this case, the method 200 may be performed as follows. At first, in the steps S202-S204, the processor 102 receives the source code of the classes defined in the application and uses the AOT compiler to parse the source code to determine the service metadata for the classes. The service metadata are presented as a VMT layout for the classes. This layout may be as simple as an array of internal representations of methods, mirroring the addresses in the resulting VMT structure, as long as the hierarchical property of the VMT is preserved. The VMT layout is then encoded by the processor 102 as the compact encoded representation in the step S206. To fully reconstruct the above-described VMT at the run-time of the application, it is enough to have just the difference of the VMT layout between class C and its superclass B. This difference may be encoded as a series of one-argument instructions, schematically shown in Table 1 below, where 'methodID' is a unique identifier of a method implementation (it may be global, per-class, per-package etc.).

**Table 1. VMT encoding instructions**

| **Instruction** | **Argument** | **Interpretation** | **Slot adjustment** |
|---|---|---|---|
| Put | methodID | Puts implementation of 'methodID' method at current 'slot' | slot := slot + 1 |
| Skip | amount | Skips next 'amount' of slots | slot := slot + amount |

Each instruction in Table 1 is represented as an integer with the least significant bit used to differentiate between the given two kinds of instructions (i.e. "Put" and "Skip"), and the rest of the bits represent the instruction argument. These integers are additionally encoded using variable-length encoding (e.g., LEB128). Looking ahead, it should be noted that the resulting encoded blob (i.e. the encoded representation of the service metadata) is stored in the initialized read-only data segment of the executable file in the step S212.

The above-described possible process for encoding the VMT layout for class C may be presented as the following pseudocode (a similar pseudocode may be written for superclass B as well):
1. Initialize variable 'skipAmount' to 0;
2. For each entry in the VMT layout of C:
   a. If the entry is inherited from the superclass layout (has the same method implementation), then increment variable 'skipAmount' by 1;
   b. Otherwise, if variable 'skipAmount' is greater than 0, then emit 'Skip(skipAmount)' instruction, and emit 'Put(id(m))' instruction, where 'id(m)' is 'methodID' of the method in the entry;
3. Write the number of emitted instructions to metadata.

Thus, the resulting encoded representation of the VMT layout for superclass B from the above example class hierarchy comprises four 'Put' instructions with 'methodID' of each entry in the VMT layout for superclass B. In turn, the resulting encoded representation of the VMT layout for class C comprises the following instructions:

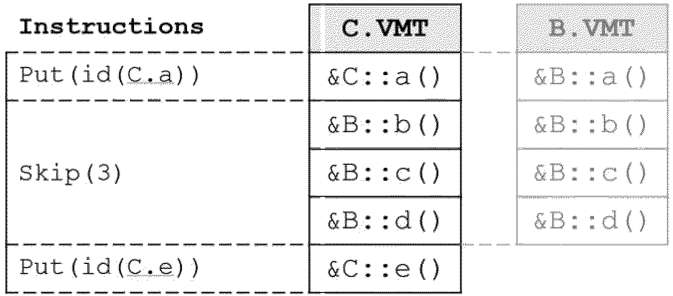

Once the encoded representations of the VMT layouts for all classes are obtained, the processor 102 compiles the source code to generate the executable file in the step S208 and reserve, at least in part, the uninitialized data segment of the executable file for the service metadata, i.e. the VMT itself, in the step S210. In other words, the processor 102 allocates an uninitialized space for the VMT in the executable file, and its address is used directly in the source code for initialization of a newly created object of that VMT's class. This space may be allocated in the BSS segment, which is represented in the executable file as a single integer - a total size of the segment in bytes. Thus, the allocation is just an increment of the BSS segment size by the size of the VMT. In the above example class hierarchy, the sizes of the VMTs for classes B and C are 4 and 5 addresses, respectively (assuming a 32-bit architecture, the address size is 4 bytes, so the VMT sizes would be 16 and 20 bytes).

When the encoded representation of the VMT layouts for all classes are obtained and stored in the initialized read-only data segment of the executable file and the uninitialized data segment of the executable file is reserved, at least in part, for the VMTs themselves, the processor 102 stores the executable file in the memory 104 in the last step S214 of the method 200.

At the application startup, the method 400 may be performed as follows. In the step S402, the processor 302 access the executable file stored in the memory 104 and reads or downloads the encoded representation of the VMT layouts for each class. Then, this encoded representation is decoded by the processor 302 in the step S404 and at the same time used to initialize the VMT structures in the step S406. The whole initialization of the VMT structures may be presented as the following pseudocode:
1. Perform a startup-time initialization step for the VMT of superclass B;
2. Copy the already initialized VMT of superclass B to this class' VMT located in the BSS segment;
3. Initialize variable 'slot' to 0;
4. For each decoded instruction:
   a. If the instruction is 'Put(id)', put the address of the method with 'id' into the 'slot' entry of the VMT;
   b. Otherwise the instruction is 'Skip(skipAmount)', so increment 'slot' by 'skipAmount'.

To demonstrate the efficiency of the methods 200 and 400 performed by the apparatuses 100 and 300, respectively, i.e. a significant reduction in both the disk footprint of the executable file and the startup time of the application, they were tested on different applications and libraries which are written in several Java Virtual Machine (JVM)-based languages and ultimately executed on a JVM (or Java Runtime Environment (JRE)) with AOT compilation support. More specifically, the following applications and libraries have been used during the tests:
- jre1.8.0_212 (cp1), which is a standard library and run-time environment for Java SE 8 with compact profile 1 (written in Java);
- scala-2.13.0, which is a standard library for Scala programming language (written in Scala);
- KotlinC-1.1.0, which is a compiler of Kotlin programming language (written in Kotlin); and
- jruby-9.1.8.0, which is an implementation of Ruby programming language using a JVM (written in Ruby and Java).

All these applications and libraries were ahead-of-time compiled and evaluated in terms of the total sizes of the encoded representation of VMT and IMT layouts and the executable file in kb.

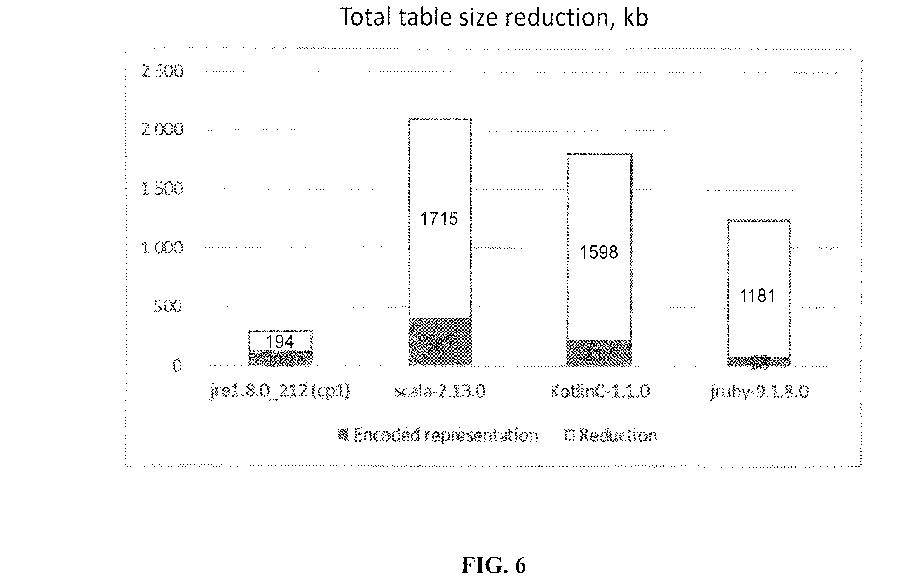

In particular, FIG. 6 is a bar chart showing a total size reduction for the encoded representation of VMT and IMT layouts. The final size of the encoded representation of the VMT and IMT layouts (i.e. the service metadata) is shown as a solid part of each bar, and the size reduction provided by the method 200 is shown as an open part of the bar. As can be seen, the total size reduction of the encoded representation for all cases is very significant (more than 50% on all tests and up to 97% on some).

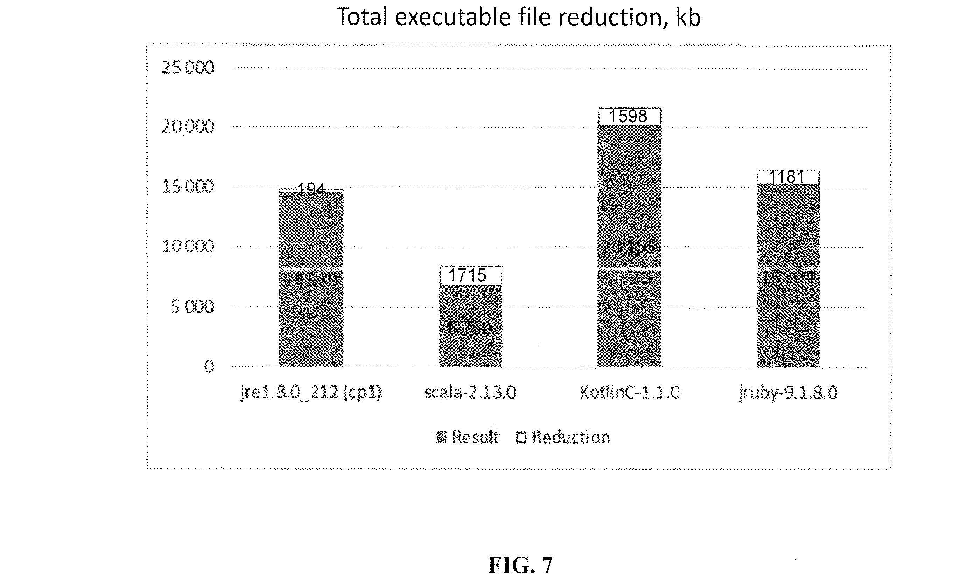

FIG. 7 is a bar chart showing a total size reduction for the executable file. Similarly, the final size of the executable file is shown as a solid part of each bar, and the size reduction provided by the method 200 is shown as an open part of the bar. The size reduction of the executable file is substantial for three of the cases (i.e. for scala-2.13.0, KotlinC-1.1.0, and jruby-9.1.8.0), but it is enough to be considered extremely viable, especially for embedded or resource-constrained devices.

It should be noted that each step or operation of the methods 200 and 300, or any combinations of the steps or operations, can be implemented by various means, such as hardware, firmware, and/or software. As an example, one or more of the steps or operations described above can be embodied by processor executable instructions, data structures, program modules, and other suitable data representations. Furthermore, the executable instructions which embody the steps or operations described above can be stored on a corresponding data carrier and executed by the processors 102 and 302. This data carrier can be implemented as any computer-readable storage medium configured to be readable by said at least one processor to execute the processor executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

## Claims

1. An apparatus (100) for encoding service metadata of an application, comprising:
at least one processor (102); and
a memory (104) coupled to the at least one processor (102) and configured to store processor-executable instructions (106),
wherein the at least one processor (102) is configured, when executing the processor-executable instructions (106), to:
- receive a source code of the application;
- based on the source code, determine the service metadata of the application;
- obtain an encoded representation of the service metadata by using a general-purpose data compression algorithm;
- compile the source code to generate an executable file of the application, the executable file comprising an initialized read-only data segment and an uninitialized data segment;
- reserve, at least in part, the uninitialized data segment of the executable file for the service metadata;
- store the encoded representation of the service metadata in the initialized read-only data segment of the executable file for the encoded representation to be decoded at run-time of the application to initialize the service metadata in the reserved uninitialized data segment; and
- store the executable file in the memory (104), and
wherein the service metadata comprises at least one of a Virtual Method Table, an Interface Method Table, and class instance layout information for a Garbage Collector.

2. The apparatus (100) of claim 1, wherein the uninitialized data segment of the executable file comprises a Block Started by Symbol segment.

3. The apparatus (100) of claim 1 or 2, wherein the at least one processor (102) is configured to determine the service metadata of the application by parsing the source code of the application.

4. The apparatus (100) of claim 1 or 2, wherein the memory (104) is further configured to store a database comprising multiple source codes and service metadata corresponding to different applications, and wherein the at least one processor (102) is configured to determine the service metadata of the application by accessing the database, finding the source code of the application in the database, and reading the service metadata of the application from the database.

5. The apparatus (100) of any one of claims 1 to 4, wherein the at least one processor (102) is configured to obtain the encoded representation of the service metadata according to at least one of:
- a type of the service metadata;
- a required size of the encoded representation of the service metadata; and
- a required decoding time of the encoded representation of the service metadata.

6. The apparatus (100) of claim 5, wherein the at least one processor (102) is further configured to select the required size of the encoded representation of the service metadata based on a pre-allocated size of the memory (104) that is to be used for storing the executable file.

7. The apparatus (100) of claim 5 or 6, wherein the at least one processor (102) is further configured to select the required decoding time based on a predefined startup time of the application.

8. The apparatus (100) of any one of claims 1 to 7, wherein the general-purpose data compression algorithm comprises at least one of variable-length encoding, Little Endian Base 128 encoding, Huffman encoding, Lempel-Ziv-Markov chain algorithm encoding, and run-length encoding.

9. The apparatus (100) of any one of claims 1 to 8, wherein the at least one processor (102) is configured to compile the source code by using an ahead-of-time compiler.

10. An apparatus (300) for initializing service metadata of an application, comprising:
at least one processor (302); and
a memory (304) coupled to the at least one processor (302) and configured to store processor-executable instructions (306),
wherein the at least one processor (302) is configured, when executing the processor-executable instructions (306), to:
- access an executable file of the application, the executable file comprising an initialized read-only data segment and an uninitialized data segment, the initialized read-only data segment of the executable file comprising an encoded representation of the service metadata for the application, and the uninitialized data segment of the executable file being reserved, at least in part, for the service metadata themselves;
- obtain a decoded representation of the service metadata by decoding the encoded representation of the service metadata using a general-purpose data decompression algorithm; and
- initialize the service metadata from the decoded representation of the service metadata in the reserved uninitialized data segment of the executable file, and
wherein the service metadata comprises at least one of a Virtual Method Table, an Interface Method Table, and class instance layout information for a Garbage Collector.

11. The apparatus (300) of claim 10, wherein the uninitialized data segment of the executable file comprises a Block Started by Symbol segment.

12. The apparatus (300) of claim 10 or 11, wherein the general-purpose data decompression algorithm comprises at least one of as variable-length decoding, Little Endian Base 128 decoding, Huffman decoding, Lempel-Ziv-Markov chain algorithm decoding, and run-length decoding.

13. A method for encoding service metadata of an application, comprising:
- receiving a source code of the application;
- based on the source code, determining the service metadata of the application;
- obtaining an encoded representation of the service metadata by using a general-purpose data compression algorithm;
- compiling the source code to generate an executable file of the application, the executable file comprising an initialized read-only data segment and an uninitialized data segment;
- reserving, at least in part, the uninitialized data segment of the executable file for the service metadata;
- storing the encoded representation of the service metadata in the initialized read-only data segment of the executable file for the encoded representation to be decoded at run-time of the application to initialize the service metadata in the reserved uninitialized data segment; and
- storing the executable file,
wherein the service metadata comprises at least one of a Virtual Method Table, an Interface Method Table, and class instance layout information for a Garbage Collector.

14. A computer program product storing a computer-readable storage medium, wherein the computer-readable storage medium comprises a computer code which, when executed by at least one processor (102), causes the at least one processor (102) to perform the method according to claim 13.

## Patentansprüche

1. Vorrichtung (100) zum Codieren von Dienstmetadaten einer Anwendung, Folgendes umfassend:
mindestens einen Prozessor (102) und
einen Speicher (104), der mit dem mindestens einen Prozessor (102) gekoppelt und dafür konfiguriert ist, prozessorausführbare Anweisungen (106) zu speichern,
wobei der mindestens eine Prozessor (102) dafür konfiguriert ist, beim Ausführen der prozessorausführbaren Anweisungen (106) Folgendes zu tun:
- Empfangen eines Quellcodes der Anwendung,
- Bestimmen der Dienstmetadaten der Anwendung, basierend auf dem Quellcode,
- Erhalten einer codierten Darstellung der Dienstmetadaten mit Hilfe eines Allzweck-Datenkompressionsalgorithmus,
- Kompilieren des Quellcodes, um eine ausführbare Datei der Anwendung zu erzeugen, wobei die ausführbare Datei ein initialisiertes Nur-Lese-Datensegment und ein nicht initialisiertes Datensegment umfasst,
- zumindest teilweises Reservieren des nicht initialisierten Datensegments der ausführbaren Datei für die Dienstmetadaten,
- Speichern der codierten Darstellung der Dienstmetadaten in dem initialisierten Nur-Lese-Datensegment der ausführbaren Datei für das Decodieren der codierten Darstellung während der Laufzeit der Anwendung, um die Dienstmetadaten in dem reservierten nicht initialisierten Datensegment zu initialisieren, und
- Speichern der ausführbaren Datei in dem Speicher (104), und
wobei die Dienstmetadaten mindestens eines von einer Tabelle virtueller Verfahren, einer Tabelle der Schnittstellenverfahren und Informationen des Klasseninstanz-Layouts für einen "Garbage Collector" umfassen.

2. Vorrichtung (100) nach Anspruch 1, wobei das nicht initialisierte Datensegment der ausführbaren Datei ein "Block-Started-by-Symbol"-Segment umfasst.

3. Vorrichtung (100) nach Anspruch 1 oder 2, wobei der mindestens eine Prozessor (102) dafür konfiguriert ist, die Dienstmetadaten der Anwendung durch Parsen des Quellcodes der Anwendung zu bestimmen.

4. Vorrichtung (100) nach Anspruch 1 oder 2, wobei der Speicher (104) ferner dafür konfiguriert ist, eine Datenbank zu speichern, die mehrere Quellcodes und Dienstmetadaten umfasst, die verschiedenen Anwendungen entsprechen, und wobei der mindestens eine Prozessor (102) dafür konfiguriert ist, die Dienstmetadaten der Anwendung durch Zugriff auf die Datenbank zu bestimmen, den Quellcode der Anwendung in der Datenbank zu finden und die Dienstmetadaten der Anwendung aus der Datenbank zu lesen.

5. Vorrichtung (100) nach einem der Ansprüche 1 bis 4, wobei der mindestens eine Prozessor (102) dafür konfiguriert ist, die codierte Darstellung der Dienstmetadaten gemäß mindestens einem des Folgenden zu erhalten:
- einer Art der Dienstmetadaten,
- einer erforderlichen Größe der codierten Darstellung der Dienstmetadaten und
- einer erforderlichen Decodierungszeit für die codierte Darstellung der Dienstmetadaten.

6. Vorrichtung (100) nach Anspruch 5, wobei der mindestens eine Prozessor (102) ferner dafür konfiguriert ist, die erforderliche Größe der codierten Darstellung der Dienstmetadaten basierend auf einer vorab zugewiesenen Größe des Speichers (104) auszuwählen, der zum Speichern der ausführbaren Datei zu verwenden ist.

7. Verfahren nach Anspruch 5 oder 6, wobei der mindestens eine Prozessor (102) ferner dafür konfiguriert ist, die erforderliche Decodierungszeit basierend auf einer vordefinierten Zeit des Startens der Anwendung auszuwählen.

8. Vorrichtung (100) nach einem der Ansprüche 1 bis 7, wobei der Allzweck-Datenkompressionsalgorithmus mindestens eines von einer Codierung variabler Länge, "Little-Endian-Base-128"-Codierung, Huffman-Codierung, Lempel-Ziv-Markov-Kettenalgorithmuscodierung und Lauflängencodierung umfasst.

9. Vorrichtung (100) nach einem der Ansprüche 1 bis 8, wobei der mindestens eine Prozessor (102) dafür konfiguriert ist, den Quellcode mit Hilfe eines AOT-, "Ahead Of Time"-, Kompilierers zu kompilieren.

10. Vorrichtung (300) zum Initialisieren von Dienstmetadaten einer Anwendung, Folgendes umfassend:
mindestens einen Prozessor (302) und
einen Speicher (404), der mit dem mindestens einen Prozessor (302) gekoppelt und dafür konfiguriert ist, prozessorausführbare Anweisungen (306) zu speichern,
wobei der mindestens eine Prozessor (302) dafür konfiguriert ist, beim Ausführen der prozessorausführbaren Anweisungen (306) Folgendes zu tun:
- Zugreifen auf eine ausführbare Datei der Anwendung, wobei die ausführbare Datei ein initialisiertes Nur-Lese-Datensegment und ein nicht initialisiertes Datensegment umfasst, wobei das initialisierte Nur-Lese-Datensegment der ausführbaren Datei eine codierte Darstellung der Dienstmetadaten für die Anwendung umfasst und das nicht initialisierte Datensegment der ausführbaren Datei zumindest teilweise für die Dienstmetadaten selbst reserviert ist,
- Erhalten einer decodierten Darstellung der Dienstmetadaten durch Decodieren der codierten Darstellung der Dienstmetadaten mit Hilfe eines Allzweck-Datenkompressionsalgorithmus und
- Initialisieren der Dienstmetadaten aus der decodierten Darstellung der Dienstmetadaten in dem reservierten nicht initialisierten Datensegment der ausführbaren Datei, und
wobei die Dienstmetadaten mindestens eines von einer Tabelle virtueller Verfahren, einer Tabelle der Schnittstellenverfahren und Informationen des Klasseninstanz-Layouts für einen "Garbage Collector" umfassen.

11. Vorrichtung (300) nach Anspruch 10, wobei das nicht initialisierte Datensegment der ausführbaren Datei ein "Block-Started-by-Symbol"-Segment umfasst.

12. Vorrichtung (300) nach Anspruch 10 oder 11, wobei der Allzweck-Datenkompressionsalgorithmus mindestens eines von einer Decodierung variabler Längen, "Little-Endian-Base-128"-Decodierung, Huffman-Decodierung, Lempel-Ziv-Markov-Kettenalgorithmusdecodierung und Lauflängendecodierung umfasst.

13. Verfahren zum Codieren von Dienstmetadaten einer Anwendung, Folgendes umfassend:
- Empfangen eines Quellcodes der Anwendung,
- Bestimmen der Dienstmetadaten der Anwendung, basierend auf dem Quellcode,
- Erhalten einer codierten Darstellung der Dienstmetadaten mit Hilfe eines Allzweck-Datenkompressionsalgorithmus,
- Kompilieren des Quellcodes, um eine ausführbare Datei der Anwendung zu erzeugen, wobei die ausführbare Datei ein initialisiertes Nur-Lese-Datensegment und ein nicht initialisiertes Datensegment umfasst,
- zumindest teilweises Reservieren des nicht initialisierten Datensegments der ausführbaren Datei für die Dienstmetadaten,
- Speichern der codierten Darstellung der Dienstmetadaten in dem initialisierten Nur-Lese-Datensegment der ausführbaren Datei für das Decodieren der codierten Darstellung während der Laufzeit der Anwendung, um die Dienstmetadaten in dem reservierten nicht initialisierten Datensegment zu initialisieren, und
- Speichern der ausführbaren Datei,
wobei die Dienstmetadaten mindestens eines von einer Tabelle virtueller Verfahren, einer Tabelle der Schnittstellenverfahren und Informationen des Klasseninstanz-Layouts für einen "Garbage Collector" umfassen.

14. Computerprogrammprodukt, ein computerlesbares Speichermedium speichernd, wobei das computerlesbare Speichermedium einen Computercode umfasst, der bei Ausführung durch mindestens einen Prozessor (102) den mindestens einen Prozessor (102) veranlasst, das Verfahren nach Anspruch 13 durchzuführen.

## Revendications

1. Appareil (100) pour coder des métadonnées de service d'une application, comprenant :
au moins un processeur (102) ; et
une mémoire (104) couplée à l'au moins un processeur (102) et configurée pour stocker des instructions exécutables par processeur (106),
dans lequel l'au moins un processeur (102) est configuré, lors de l'exécution des instructions exécutables par processeur (106), pour :
- recevoir un code source de l'application ;
- sur la base du code source, déterminer les métadonnées de service de l'application ;
- obtenir une représentation codée des métadonnées de service au moyen d'un algorithme de compression de données universel ;
- compiler le code source pour générer un fichier exécutable de l'application, le fichier exécutable comprenant un segment de données initialisé en lecture seule et un segment de données non initialisé ;
- réserver, au moins en partie, le segment de données non initialisé du fichier exécutable pour les métadonnées de service ;
- stocker la représentation codée des métadonnées de service dans le segment de données initialisé en lecture seule du fichier exécutable pour permettre le décodage de la représentation codée pendant l'exécution de l'application pour initialiser les métadonnées de service dans le segment de données non initialisé réservé ; et
- stocker le fichier exécutable dans la mémoire (104), et
dans lequel les métadonnées de service comprennent au moins un élément parmi une table de méthodes virtuelles, une table de méthodes d'interface et une information sur la disposition des instances de classe pour un récupérateur d'espace.

2. Appareil (100) selon la revendication 1, dans lequel le segment de données non initialisé du fichier exécutable comprend un segment Block Started by Symbol.

3. Appareil (100) selon la revendication 1 ou 2, dans lequel l'au moins un processeur (102) est configuré pour déterminer les métadonnées de service de l'application par analyse du code source de l'application.

4. Appareil (100) selon la revendication 1 ou 2, dans lequel la mémoire (104) est également configurée pour stocker une base de données comprenant de multiples codes source et des métadonnées de service correspondant à différentes applications, et dans lequel l'au moins un processeur (102) est configuré pour déterminer les métadonnées de service de l'application en accédant à la base de données, en trouvant le code source de l'application dans la base de données et en lisant les métadonnées de service de l'application dans la base de données.

5. Appareil (100) selon l'une quelconque des revendications 1 à 4, dans lequel l'au moins un processeur (102) est configuré pour obtenir la représentation codée des métadonnées de service en fonction d'au moins un des éléments suivants :
- un type des métadonnées de service ;
- une taille exigée de la représentation codée des métadonnées de service ; et
- un temps de décodage exigé de la représentation codée des métadonnées de service.

6. Appareil (100) selon la revendication 5, dans lequel l'au moins un processeur (102) est également configuré pour choisir la taille exigée de la représentation codée des métadonnées de service sur la base d'une taille préallouée de la mémoire (104) qui doit être utilisée pour stocker le fichier exécutable.

7. Appareil (100) selon la revendication 5 ou 6, dans lequel l'au moins un processeur (102) est également configuré pour choisir le temps de décodage exigé sur la base d'un temps de démarrage prédéfini de l'application.

8. Appareil (100) selon l'une quelconque des revendications 1 à 7, dans lequel l'algorithme de compression de données universel comprend au moins l'un des codages suivants : codage à longueur variable, codage petit-boutiste de base 128, codage Huffman, codage d'algorithme de chaîne Lempel-Ziv-Markov et codage par longueur de plage.

9. Appareil (100) selon l'une quelconque des revendications 1 à 8, dans lequel l'au moins un processeur (102) est configuré pour compiler le code source au moyen d'un compilateur anticipateur.

10. Appareil (300) pour initialiser des métadonnées de service d'une application, comprenant :
au moins un processeur (302) ; et
une mémoire (304) couplée à l'au moins un processeur (302) et configurée pour stocker des instructions exécutables par processeur (306),
dans lequel l'au moins un processeur (102) est configuré, lors de l'exécution des instructions exécutables par processeur (306), pour :
- accéder à un fichier exécutable de l'application, le fichier exécutable comprenant un segment de données initialisé en lecture seule et un segment de données non initialisé, le segment de données initialisé en lecture seule du fichier exécutable comprenant une représentation codée des métadonnées de service pour l'application, et le segment de données non initialisé du fichier exécutable étant réservé, au moins en partie, pour les métadonnées de service elles-mêmes ;
- obtenir une représentation décodée des métadonnées de service en décodant la représentation codée des métadonnées de service au moyen d'un algorithme de décompression de données universel ; et
- initialiser les métadonnées de service issues de la représentation décodée des métadonnées de service dans le segment de données non initialisé réservé du fichier exécutable, et
dans lequel les métadonnées de service comprennent au moins un élément parmi une table de méthodes virtuelles, une table de méthodes d'interface et une information sur la disposition des instances de classe pour un récupérateur d'espace.

11. Appareil (300) selon la revendication 10, dans lequel le segment de données non initialisé du fichier exécutable comprend un segment Block Started by Symbol.

12. Appareil (300) selon la revendication 10 ou 11, dans lequel l'algorithme de décompression de données universel comprend au moins l'un des décodages suivants : décodage à longueur variable, décodage petit-boutiste de base 128, décodage Huffman, décodage d'algorithme de chaîne Lempel-Ziv-Markov et décodage par longueur de plage.

13. Procédé pour coder des métadonnées de service d'une application, comprenant les étapes consistant à :
- recevoir un code source de l'application ;
- sur la base du code source, déterminer les métadonnées de service de l'application ;
- obtenir une représentation codée des métadonnées de service au moyen d'un algorithme de compression de données universel ;
- compiler le code source pour générer un fichier exécutable de l'application, le fichier exécutable comprenant un segment de données initialisé en lecture seule et un segment de données non initialisé ;
- réserver, au moins en partie, le segment de données non initialisé du fichier exécutable pour les métadonnées de service ;
- stocker la représentation codée des métadonnées de service dans le segment de données initialisé en lecture seule du fichier exécutable pour permettre le décodage de la représentation codée pendant l'exécution de l'application pour initialiser les métadonnées de service dans le segment de données non initialisé réservé ; et
- stocker le fichier exécutable,
dans lequel les métadonnées de service comprennent au moins un élément parmi une table de méthodes virtuelles, une table de méthodes d'interface et une information sur la disposition des instances de classe pour un récupérateur d'espace.

14. Produit-programme informatique stockant un support de stockage lisible par ordinateur, le support de stockage lisible par ordinateur comprenant un code informatique qui, lorsqu'il est exécuté par au moins un processeur (102), amène l'au moins un processeur (102) à réaliser le procédé selon la revendication 13.
